# EUROPÄISCHE PATENTSCHRIFT

(11) **EP 1 676 038 B1**
(45) Veröffentlichungstag und Bekanntmachung des Hinweises auf die Patenterteilung: **31.12.2008**
(21) Anmeldenummer: 04790419.8
(22) Anmeldetag: 14.10.2004
(51) Int. Cl.: F16C 23/04, F16C 33/20, F16C 41/04

(54) **Kugelgelenkiges Lager, insbesondere zum Gegenseitigen Zentrieren zweier Wellenenden**
Ball joint bearing, especially for mutually centering two shaft ends
Palier è rotulé servant notamment au centrage mutuel de deux extrimités d'abres

(30) Priorität: 21.10.2003 DE 10348787
(43) Veröffentlichungstag der Anmeldung: 05.07.2006
(73) Patentinhaber: SGF SÜDDEUTSCHE GELENKSCHEIBENFABRIK GMBH & CO. KG., 84478 Waldkraiburg (DE)
(72) Erfinder: ROTHE, Joachim, 84453 Mühldorf (DE)
(74) Vertreter: Thum, Bernhard
(86) Internationale Anmeldenummer: PCT/EP2004/011563
(87) Internationale Veröffentlichungsnummer: WO 2005/042991

(56) Entgegenhaltungen:
- GB-A- 1 120 686
- US-A- 2 954 992
- US-A- 3 094 376
- US-A- 3 482 465
- US-A- 3 591 669
- US-A- 4 118 952

## Beschreibung

Die Erfindung betrifft ein Lager nach dem Oberbegriff des Anspruchs 1.

Aus DE 29 43 711 A1 ist ein kugelgelenkiges Lager dieser Gattung bekannt, bei dem in eine im Wesentlichen zylindrische Bohrung eines Lagergehäuses ein Lageraußenring eingesetzt und gegen axiale Verschiebung dadurch gesichert ist, dass der Lageraußenring in der Nähe mindestens einer seiner beiden Stirnseiten ein radial nach außen vorspringendes Halteprofil aufweist, das in eine in die zylindrische Bohrung des Lagergehäuses eingearbeitete Ringnut eingerastet ist. Der Lagerinnenring kann sich gegenüber dem Lageraußenring wegen der aneinander liegenden komplementären sphärischen Flächen dieser beiden Ringe nur dadurch bewegen, dass der Lagerinnenring um den gemeinsamen Mittelpunkt dieser Flächen kippt. Eine axiale Relatiwerschiebung ist hingegen zwischen dem Lagerinnenring und dem in ihm gelagerten Bauteil vorgesehen; zu diesem Zweck ist die im Lagerinnenring ausgebildete Aufnahme eine zylindrische Bohrung, in der eine entsprechende zylindrische Außenfläche des gelagerten Bauteils, einer Hohlwelle, geführt ist.

Ein ebenfalls kugelgelenkiges Lager ist aus DE 101 50 189 A1 bekannt. Dort ist ein Lageraußenring, der eine sphärische Innenfläche aufweist und einen komplementär sphärischen Lagerinnenring umschließt, durch einen schwingungsdämpfenden Elastomerringkörper mit einem hülsenartigen Lagergehäuse verbunden. Der Lagerinnenring hat wiederum eine zylindrische Bohrung als Aufnahme für ein zu lagerndes Bauteil, das beispielsweise Bestandteil eines in einem Fahrzeug zu befestigenden Schwingungsdämpfers sein kann.

Wie beispielsweise aus US 4 118 952 A bekannt, werden kugelgelenkige Lager der eingangs genannten Gattung auch zum gegenseitigen Zentrieren zweier Wellenenden verwendet, die als Bestandteile eines Antriebsstrangs in einem Kraftfahrzeug Drehmomente übertragend und gegeneinander begrenzt axial verschiebbar, verdrehbar und beugbar miteinander verbunden sind.

Bei den beschriebenen bekannten kugelgelenkigen Lagern sind die beiden Lagerringe von Anfang an mindestens in einem Maß gegeneinander winkelbeweglich, das durch vorgesehene Betriebsbedingungen des Lagers vorgegeben ist. Im Allgemeinen wird die Winkelbeweglichkeit der Lagerringe erst durch den Einbau des Lagers am vorgesehenen Verwendungsort beschränkt. Die Erfindung beruht demgegenüber auf der Erkenntnis, dass bestimmte, vor Betriebsbeginn notwendige Handhabungen eines gattungsgemäßen Lagers durch die ursprüngliche Winkelbeweglichkeit der Lagerringe in Bezug zueinander erschwert werden können. Eine solche Handhabung kann z.B. eine Messung oder Nachbearbeitung des Lagers sein oder ein Zusammenfügen des Lagers mit anderen Bauteilen vor deren endgültiger Montage sowie diese Montage selbst. Jede solche Handhabung kann bei bekannten gattungsgemäßen Lagern dadurch verzögert werden, dass eine zufällige Schrägstellung des Lagerinnenrings in Bezug auf den Lageraußenring rückgängig gemacht werden muss, ehe die betreffende Handhabung ausgeführt werden kann.

Der Erfindung liegt deshalb die Aufgabe zugrunde, ein kugelgelenkiges Lager der genannten Gattung derart weiterzubilden, dass Handhabungen der im Vorstehenden beispielsweise beschriebenen Art erleichtert werden.

Dokument US 3,094,376 A offenbart ein kugelgelenkiges Lager gemäß dem Oberbegriff des Anspruchs 1.

Die Aufgabe ist erfindungsgemäß mit den Merkmalen des Anspruchs 1 gelöst. Vorteilhafte Ausgestaltungen ergeben sich aus den Unteransprüchen.

Ausführungsbeispiele mit weiteren Einzelheiten der Erfindung werden im folgenden anhand schematischer Zeichnungen beschrieben:
- Fig. 1: ist ein axialer Schnitt durch zwei Wellenenden im Antriebsstrang eines Kraftfahrzeugs, die durch ein erfindungsgemäßes Lager miteinander gelenkig verbunden und in bezug zueinander zentriert sind;
- Fig. 2: ist ein stark vergrößerter Ausschnitt aus Fig. 1;
- Fig. 3: ist ein weiter vergrößerter Ausschnitt im Bereich III der Fig. 2;
- Fig. 4: ist ein Einzelteil aus Fig. 2;
- Fig. 5: ist eine der Fig. 2 vergleichbare Darstellung einer abgewandelten Ausführungsform der Erfindung;
- Fig. 6: ist ein vergrößerter Ausschnitt im Bereich VI der Fig. 5;
- Fig.7: ist ein mit Fig.3 und Fig.6 vergleichbarer Ausschnitt eines nicht erfindungsgemäßen Lagers;
- Fig.8: ist ein vergrößerter Ausschnitt im Bereich VIII der Fig.7.

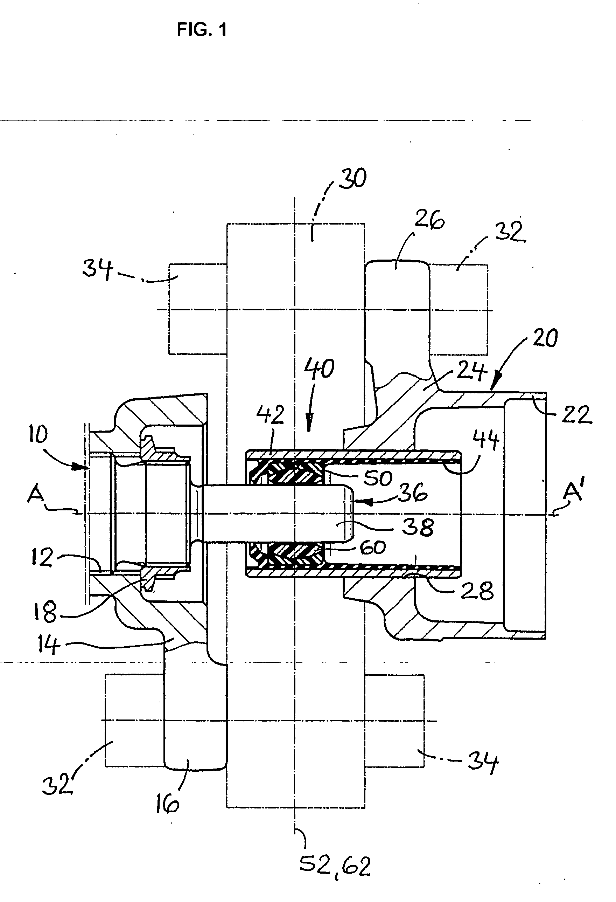

In Fig. 1 ist ein erstes Wellenende 10 angedeutet, das zur Abtriebswelle eines Schaltgetriebes eines Kraftfahrzeugs gehört. Am ersten Wellenende 10 ist ein äußeres Vielnutprofil 12 ausgebildet, das drehmomentübertragend mit einem komplementären inneren Vielnutprofil an einem Flansch 14 verbunden ist. Der Flansch 14 hat drei in Winkelabständen von 120° radial wegragende Arme 16, ist in Richtung der Achse A' des ersten Wellenendes 10 auf dieses aufgesteckt und mittels eines Schraubrings 18 festgehalten.

Dem ersten Wellenende 10 steht ein zweites Wellenende 20 gegenüber, dessen Achse A in der abgebildeten Ruhelage des Wellenstranges, zu dem die beiden Wellenenden 10 und 20 gehören, mit der Achse A fluchtet. Am zweiten Wellenende 20 ist ein vom ersten Wellenende 10 abgewandter Befestigungskragen 22 ausgebildet, der dazu bestimmt ist, mit einem rohrförmigen Wellenabschnitt einer Kardanwelle zusammengesteckt und verschweißt zu werden. In entsprechender Weise wie das Wellenende 10 hat auch das Wellenende 20 einen Flansch 24 mit drei radial wegragenden Armen 26, die gegeneinander um 120° versetzt und in montiertem Zustand in bezug auf die von Flansch 14 wegragenden Arme 16 auf Lücke angeordnet sind. Dem ersten Wellenende 10 zugewandt ist am zweiten Wellenende 20 eine Zentrierbohrung 28 ausgebildet.

Zwischen den von je drei Armen 16 bzw. 26 gebildeten Armsternen ist eine beuge-und drehelastische Gelenkscheibe 30 bekannter Bauart angeordnet, die an jedem der genannten Arme 16 und 26 mit je einer Schraube 32 und einer zugehörigen Mutter 34 befestigt ist. Die Gelenkscheibe 30 bildet eine Drehmomente übertragende Verbindung zwischen den beiden Wellenenden 10 und 20, ist jedoch nicht imstande, diese ausreichend genau in bezug zueinander zu zentrieren. Deshalb ist dem ersten Wellenende 10 ein zu lagerndes Bauteil 36 zugeordnet, das in allen hier beschriebenen Ausführungsbeispielen ein nur in Fig. 1 dargestellter, mit dem ersten Wellenende 10 einstückiger Zapfen mit einer äußeren Zylinderfläche 38 ist. Dieses Bauteil 36 ist im montierten Zustand gemäß Fig. 1 in einem dem zweiten Wellenende 20 zugeordneten kugelgelenkigen Lager 40 derart gelagert, dass die beiden Wellenenden in bezug zueinander begrenzt axial verschiebbar, um ihre Achse A bzw. A' begrenzt gegeneinander verdrehbar sowie um Achsen beugbar sind, die sich normal zu den Achsen A und A' erstrecken.

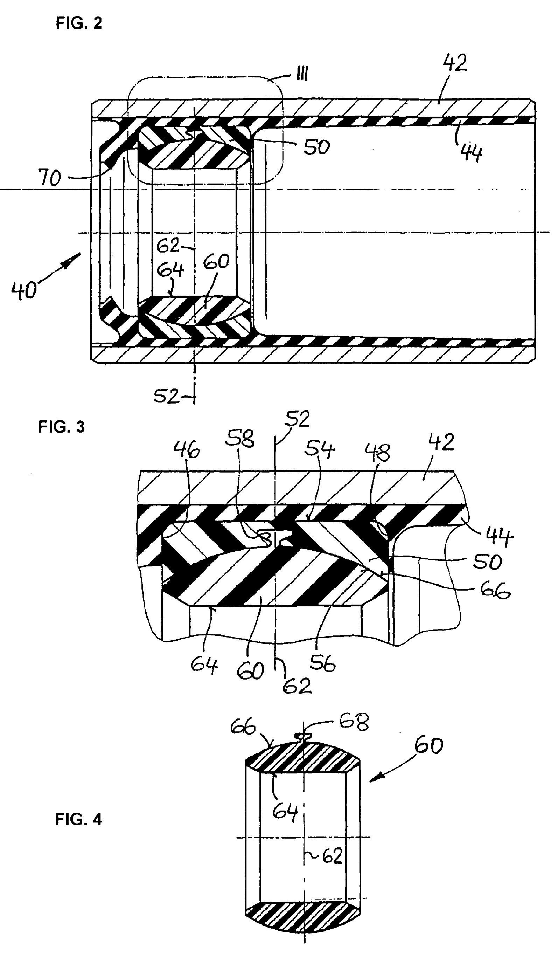

Das Lager 40 hat ein starres, rohrförmiges Lagergehäuse 42 aus Metall, das mit Preßsitz in die Zentrierbohrung 28 eingepreßt ist und eine Auskleidung 44 aus gummielastischem Material aufweist. In der Auskleidung 44 sind zwei Schultern 46 und 48 ausgebildet, zwischen denen ein Lageraußenring 50 festgehalten ist. Der Lageraußenring 50 ist in bezug auf eine zur Achse A' normale Äquatorialebene 52 symmetrisch und weist eine zylindrische Außenfläche 54 sowie eine konkave sphärische (kugelsegmentförmige) Innenfläche 56 auf. In dem Ausführungsbeispiel gemäß Fig. 1 bis 4 ist der Lageraußenring 50 aus Kunststoff mit guten Gleiteigenschaften gespritzt und mit mehreren an seine Innenfläche 56 angrenzenden, in Winkelabständen von z.B. 120° rings um die Achse A' gegeneinander versetzten Ankerstellen 58 von T-förmigem Querschnitt versehen. Im Lageraußenring 50 ist ein Lagerinnenring 60 gelagert, der in bezug auf eine zur Achse A normale Äquatorialebene 62 symmetrisch gestaltet und mit einer zentralen Aufnahme 64 in Form einer zylindrischen Bohrung ausgestattet ist und eine konvexe sphärische (kugelsegmentförmige) Außenfläche 66 aufweist, die spielfrei an der Innenfläche 56 des Lageraußenrings 50 anliegt.

Im Ausführungsbeispiel gemäß Fig. 1 bis 4 ist der Lagerinnenring 60 nach einem bekannten Kunststoff-In-Kunststoff-Verfahren in den Lageraußenring 50 hineingespritzt und dabei mit T- oder pilzförmigen Ankern 68 versehen worden, die über seine konvexe sphärische Außenfläche 66 hinaus ragen, in je einer der Ankerstellen 58 ausgeformt und darin festgehalten sind. Durch diese beim Spritzen des Lagerinnenrings 60 entstandene Verbindung ist der Lagerinnenring 60 im unbenutzten Zustand des kugelgelenkigen Lagers 40 innerhalb des Lageraußenrings 50 mit diesem koaxial gehalten, wobei die Äquatorialebene 62 des Lagerinnenrings 60 mit der Äquatorialebene 52 des Lageraußenrings 50 übereinstimmt.

In dieser ursprünglichen Anordnung lässt sich die zentrale Aufnahme 64 des Lagerinnenrings 60 mit der entsprechend dem Anwendungsfall wünschenswerten Genauigkeit spanend bearbeiten, beispielsweise durch sogenanntes Ausspindeln mittels eines mit hoher Drehzahl umlaufenden Bohr- oder Drehwerkzeugs. Bei einer solchen spanenden Bearbeitung der beim Spritzen oder Druckgießen des Lagerinnenrings 60 mit einer Bearbeitungszugabe hergestellten Aufnahme 64 bleibt die starre Verbindung des Lagerinnenrings 60 mit dem Lageraußenring 50 über die an den Ankerstellen 58 formschlüssig festgehaltenen Anker 68 noch erhalten, und es wird sichergestellt, dass beim Zusammenbau der in Fig. 1 abgebildeten Anordnung der Zapfen, der das zu lagernde Bauteil 36 bildet, ohne Schwierigkeiten durch eine am Lager 40 ausgebildete ringförmige Dichtlippe 70 hindurch in die zentrale Aufnahme 64 des Lagerinnenrings 60 eingeführt werden kann und dann spielfrei, jedoch axial verschiebbar, im Lager 40 gelagert ist.

Die Anker 68 sind jedoch so bemessen, dass sie in einem unmittelbar an die konvexe sphärische Außenfläche 66 des Lagerinnenrings 60 angrenzenden Bereich brechen, sobald nach der Montage der in Fig. 1 abgebildeten Anordnung die Achsen A und A' ihre miteinander fluchtende Lage verlassen, indem die Wellen, zu denen die Wellenenden 10 und 20 gehören, eine Beugebewegung in bezug zueinander ausführen, wie dies bei einem Antriebsstrang eines Kraftfahrzeugs schon bei dessen endgültigem Einbau, spätestens aber bei Federungsbewegungen des Kraftfahrzeugs, regelmäßig der Fall ist. Die Querschnitte, in denen die Anker 68 vom Lagerinnenring 60 abbrechen, sind so klein bemessen, dass die Bruchflächen im Verhältnis zu den miteinander zusammenwirkenden sphärischen Flächen 56 und 66 des Lageraußenrings 50 und des Lagerinnenrings 60 bedeutungslos sind.

Eine nicht dargestellte Variante der in Fig. 1 bis 4 abgebildeten Ausführungsform besteht darin, dass die Anker am Lageraußenring 50 ausgebildet sind und sich über dessen konkave sphärische Innenfläche 56 hinaus nach innen erstrecken, während die zugehörigen Ankerstellen am Lagerinnenring 60 als von dessen konvexer sphärischer Außenfläche 66 ausgehende Vertiefungen ausgebildet sind.

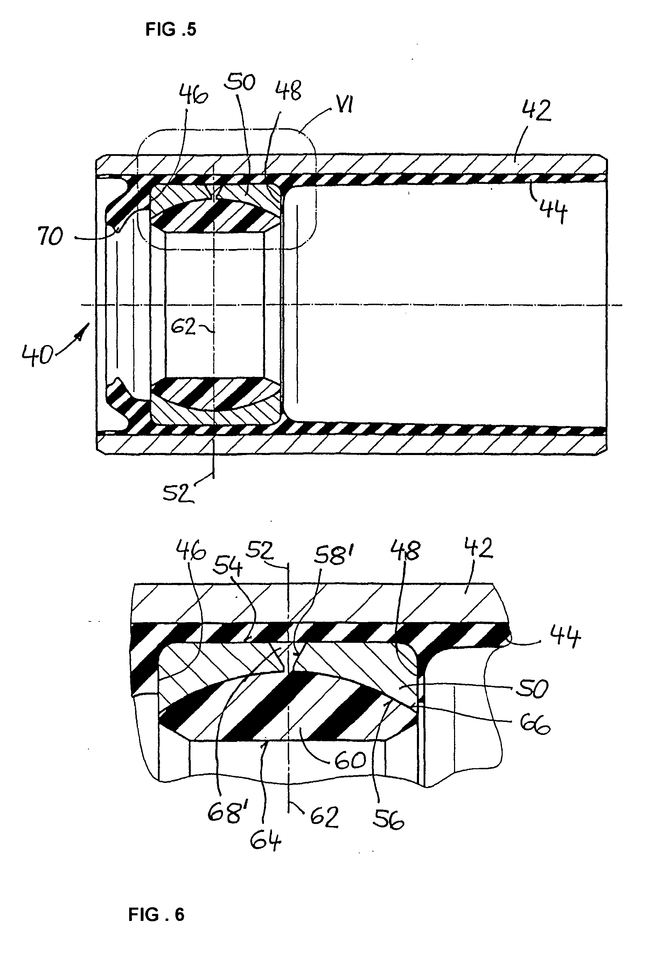

Das Ausführungsbeispiel gemäß Fig. 5 und 6 unterscheidet sich von dem in Fig. 1 bis 4 dargestellten dadurch, dass der Lageraußenring 50 aus Metall besteht, beispielsweise aus Stahl oder Sinterbronze, und dass er Ankerstellen 58' in Form radialer Durchgangsbohrungen aufweist, die sich nach außen hin trichterförmig erweitern. Auch diese Ankerstellen 58' sind rings um die Achse A' in gleichen Winkelabständen von z.B. 120° gegeneinander versetzt angeordnet. Der Lagerinnenring 60 besteht weiterhin aus Kunststoff, und bei seiner Herstellung durch Spritzen oder Druckgießen hat der Lageraußenring 50 als Form gedient, so dass in dessen Ankerstellen 58' je ein komplementärer Anker 68' entstanden ist. Auch bei diesem Ausführungsbeispiel besteht also zwischen den beiden Lagerringen 50 und 60 eine zusätzliche Verbindung, durch die sie in ihrer koaxialen Stellung gehalten sind, solange diese Verbindung nicht gelöst worden ist.

Fig. 6 macht besonders deutlich, dass die Anker 68 ihren geringsten Querschnitt in je einer die sphärische Außenfläche 66 des Lagerinnenrings 60 tangierenden Ebene haben. In dieser Ebene wird der Anker 68' brechen, wenn bei oder nach dem Einbau des kugelgelenkigen Lagers 40 die Achsen A und A' erstmals in bezug zueinander gebeugt werden. Die so entstehenden Bruchstellen sind wegen ihrer-Lage und geringen Ausdehnung völlig unschädlich.

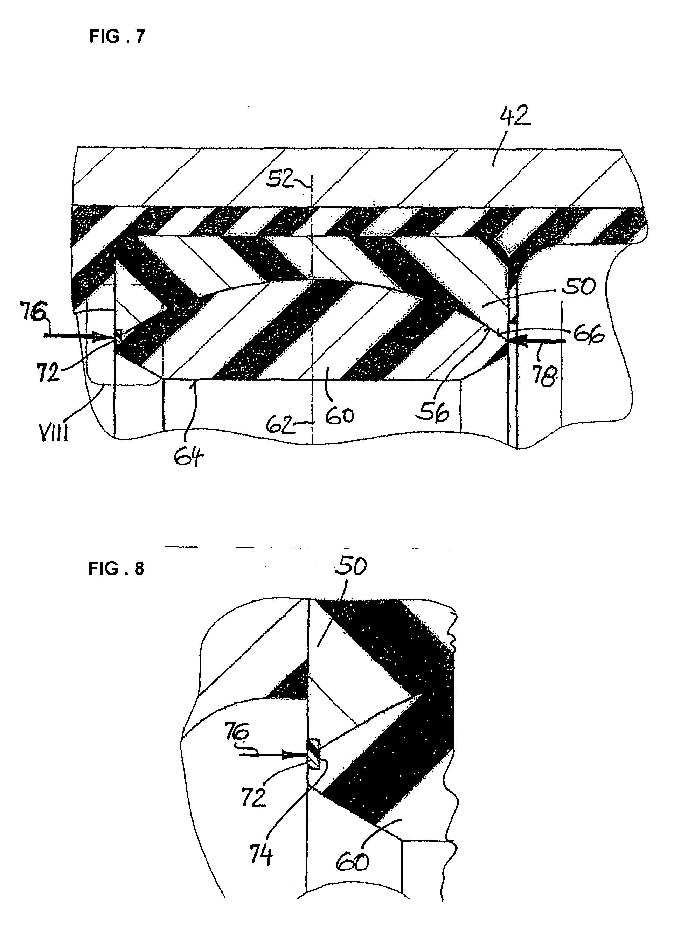

Bei dem nicht erfindungsgemäßen Lager gemäß Fig.7 und 8 ist eine die sphärische Lagerung des Lagerinnenrings 60 im Lageraußenring 50 fixierende zusätzliche Verbindung zwischen diesen beiden Lagerringen im Gegensatz zu den vorangehenden Ausführungsbeispielen nicht in der Äquatorialebene 52 bzw. 62 ausgebildet, sondern an einer Stirnfläche, nämlich der in den Zeichnungen linken. Diese Verbindung besteht darin, dass die beiden Lagerringe 50 und 60 an mindestens einer Verbindungsstelle 72, die an die beiden sphärischen Flächen 56 und 66 angrenzt, miteinander verklebt, verschweißt oder verstemmt sind. Vorzugsweise sind drei um 120° gegeneinander versetzt rings um die gemeinsame Achse A, A' angeordnete Verbindungsstellen 72 vorgesehen. Für die Verbindungsstellen 72 ist zweckmäßigerweise eine vorgeformte gemeinsame Ringnut 74 vorgesehen.

Zum Herstellen dieser zusätzlichen Verbindung zwischen den beiden Lagerringen 50 und 60 kann ein Schweiß- oder Stemmwerkzeug verwendet werden, das beispielsweise drei Stempel aufweist, von denen einer in Fig.7 und 8 mit einem Pfeil 76 angedeutet ist. Ein solches Werkzeug und ein an der entgegengesetzten Stirnseite der Lagerringe 50, 60 anzusetzender Gegenhalter mit entsprechenden Stempeln 78 kann dazu verwendet werden, die beiden Lagerringe 50, 60 einzuspannen, wenn die zentrale Aufnahme 64 ausgespindelt werden soll.

## Patentansprüche

1. Kugelgelenkiges Lager (40), insbesondere zum gegenseitigen Zentrieren zweier Wellenenden (10, 20), die Drehmomente übertragend und gegeneinander begrenzt axial verschiebbar, verdrehbar und beugbar miteinander verbunden sind, mit
- einem Lageraußenring (50), der eine Außenfläche (54) für seinen Einbau in ein Lagergehäuse (42) sowie eine sphärische Innenfläche (56) aufweist, und
- einem Lagerinnenring (60), der eine sphärische Außenfläche (66) aufweist, mit der er an der Innenfläche (56) des Lageraußenrings (50) anliegt, und eine zentrale Aufnahme (64) für ein zu lagerndes Bauteil (36) aufweist,
- wobei der Lagerinnenring (60) in einer Ausgangslage des Lagers (40) gleichachsig mit dem Lageraußenring (50) angeordnet ist,
**dadurch gekennzeichnet, dass**
- ein erster (50) der beiden Lagerringe (50, 60) mindestens eine Ankerstelle (58; 58') aufweist, die an dessen sphärische Fläche (56) angrenzt, und
- der zweite Lagerring (60) aus Kunststoff einstückig mit mindestens einem Anker (68; 68') an den ersten Lagerring (50) angespritzt ist,
- wobei Ankerstelle (58; 58') und Anker (68; 68') gemeinsam eine zusätzliche Verbindung zwischen den beiden Lagerringen (50, 60) bilden, die für eine Nachbearbeitung der zentralen Aufnahme (64) und/oder für eine erstmalige Montage des Lagers (40) die mit dem Lageraußenring (50) gleichachsige Anordnung des Lagerinnenrings (60) aufrecht erhält, die aber bei deren erstmaliger gegenseitiger Winkelauslenkung unter Betriebsbedingungen durch Ankerbruch zerstört wird.

2. Lager nach Anspruch 1,
**dadurch gekennzeichnet, dass** Ankerstelle (58; 58') und Anker (68; 68') in einer Äquatorialebene (52 bzw. 62) des zugehörigen Lagerrings (50, 60) angeordnet sind.

3. Lager nach Anspruch 1 oder 2,
**dadurch gekennzeichnet, dass** als Ankerstelle (58) eine Ringnut in die sphärische Fläche (56) eines der beiden Lagerringe (50) eingearbeitet ist und am anderen Lagerring (60) eine komplementäre Ringrippe als Anker (68) ausgebildet ist.

4. Lager nach einem der Ansprüche 1 bis 3,
**dadurch gekennzeichnet, dass** Ankerstelle (58) und Anker (68) einen T-förmigen Querschnitt haben.

5. Lager nach Anspruch 1 oder 2,
**dadurch gekennzeichnet, dass** als Ankerstellen (58') radiale Bohrungen, und als Anker (68') komplementäre radiale Zapfen vorgesehen sind.

6. Lager nach einem der Ansprüche 1 bis 5,
**dadurch gekennzeichnet, dass** einer der beiden Lagerringe (50, 60) aus Metall besteht, und dass sämtliche Ankerstellen (58; 58') an diesem Lagerring ausgebildet sind.

## Claims

1. Ball joint bearing (40), especially for mutually centring two shaft ends (10, 20) which are connected together so as to transmit torques and so as to be axially displaceable, rotatable and bendable relative to each other to a limited degree, with
- a bearing outer ring (50) having an outer surface (54) for its installation in a bearing housing (42) and a spherical inner surface (56), and
- a bearing inner ring (60) having a spherical outer surface (66) with which it lies against the inner surface (56) of the bearing outer ring (50), and a central seat (64) for a structural part (36) which is to be supported,
- wherein the bearing inner ring (60) is disposed coaxially with the bearing outer ring (50) when the bearing (40) is in an initial position,
**characterised in that**
- a first (50) of the two bearing rings (50, 60) comprises at least one anchor point (58; 58') which is adjacent to its spherical surface (56), and
- the second bearing ring (60) is injection moulded from a plastics material so as to be integral with at least one anchor (68; 68') at the first bearing ring (50),
- wherein the anchor point (58; 58') and the anchor (68; 68') together form an additional connection between the two bearing rings (50, 60) which maintains the coaxial arrangement of the bearing inner ring (60) with the bearing outer ring (50) for a post-treatment of the central seat (64) and/or for a first-time assembly of the bearing (40), but which is destroyed upon the first mutual angular deflection of these by an anchor fracture.

2. Bearing according to Claim 1,
**characterised in that** the anchor point (58; 58') and the anchor (68; 68') are disposed in an equatorial plane (52 and 62, respectively,) of the associated bearing ring (50, 60).

3. Bearing according to Claim 1 or 2,
**characterised in that** an annular groove is worked into the spherical surface (56) of one of the two bearing rings (50) as the anchor point (58), and a complementary annular rib is formed at the other bearing ring (60) as the anchor (68).

4. Bearing according to any one of Claims 1 to 3,
**characterised in that** the anchor point (58) and the anchor (68) have a T-shaped cross section.

5. Bearing according to Claim 1 or 2,
**characterised in that** radial bores are provided as anchor points (58') and complementary radial pins as anchors (68').

6. Bearing according to any one of Claims 1 to 5,
**characterised in that** one of the two bearing rings (50, 60) consists of metal, and that all the anchor points (58; 58') are formed at this bearing ring.

## Revendications

1. Palier à rotule (40), servant notamment au centrage mutuel de deux extrémités d'arbre (10, 20) reliées entre elles de manière à pouvoir transmettre des couples de rotation et être soumises à la flexion, entraînées en rotation et déplacées l'une par rapport à l'autre de façon limitée, et comprenant
- une bague extérieure (50) présentant une surface externe (54) pour son montage dans un logement de palier (42) et une surface interne sphérique (56), ainsi que
- une bague intérieure (60) présentant une surface externe sphérique (66) en appui sur la surface interne (56) de la bague extérieure (50), et un logement central (64) destiné à recevoir un composant (36) devant être supporté,
- la bague intérieure (60) étant disposée dans une position initiale du palier (40), sur le même axe que la bague extérieure (50),
**caractérisé en ce que**
- une première (50) des deux bagues (50, 60) présente au moins un emplacement d'ancrage (58 ; 58') attenant à sa surface sphérique (56), et
- la deuxième bague (60) est réalisée en matière plastique et moulée par injection d'un seul tenant avec au moins un dispositif d'ancrage (68 ; 68') sur la première bague (50),
- l'emplacement d'ancrage (58 ; 58') et le dispositif d'ancrage (68 ; 68') formant conjointement une liaison supplémentaire entre les deux bagues (50, 60), laquelle maintient la disposition de la bague intérieure (60) dans l'axe de la bague extérieure (50) lors d'un usinage ultérieur du logement central (64) et/ou lors d'un premier montage du palier (40), et qui, dans des conditions de fonctionnement, sera détruite par rupture du dispositif d'ancrage lors du premier déplacement angulaire des bagues l'une par à rapport à l'autre.

2. Palier selon la revendication 1,
**caractérisé en ce que** l'emplacement d'ancrage (58 ; 58') et le dispositif d'ancrage (68 ; 68') sont disposés dans un plan équatorial (52 ou 62) de la bague (50, 60) correspondante.

3. Palier selon la revendication 1 ou 2,
**caractérisé en ce que** l'emplacement d'ancrage (58) se présente sous la forme d'une rainure annulaire réalisée dans la surface sphérique (56) d'une des deux bagues (50) et le dispositif d'ancrage (68) est constitué par une nervure annulaire complémentaire sur l'autre bague (60).

4. Palier selon l'une des revendications 1 à 3,
**caractérisé en ce que** l'emplacement d'ancrage (58) et le dispositif d'ancrage (68) possèdent une section en forme de T.

5. Palier selon la revendication 1 ou 2,
**caractérisé en ce que** des alésages radiaux sont prévus comme emplacements d'ancrage (58'), et, comme dispositifs d'ancrage (68'), des tenons radiaux complémentaires.

6. Palier selon l'une des revendications 1 à 5,
**caractérisé en ce qu'**une des deux bagues (50, 60) est en métal, et **en ce que** tous les emplacements d'ancrage (58 ; 58') sont formés sur cette bague.
